# EUROPÄISCHE PATENTSCHRIFT

(11) **EP 1 199 015 B1**
(45) Veröffentlichungstag und Bekanntmachung des Hinweises auf die Patenterteilung: **27.04.2005**
(21) Anmeldenummer: 01124128.8
(22) Anmeldetag: 10.10.2001
(51) Int. Cl.: A47J 27/08, A47J 27/62

(54) **Dampfgargerät mit einer kalibrierungslosen Sollsiedetemperatur**
Steam cooking device with a target boiling temperature which does not require calibration
Cuiseur à vapeur avec une température à bouillir voulue qui ne demande pas de calibrage

(30) Priorität: 20.10.2000 DE 10052137
(43) Veröffentlichungstag der Anmeldung: 24.04.2002
(73) Patentinhaber: BSH Bosch und Siemens Hausgeräte GmbH, 81739 München (DE)
(72) Erfinder: Rödelsperger, Frank, Dr. rer. nat., 64739 Höchst (DE)

(56) Entgegenhaltungen:
- EP-A- 0 903 097
- DE-A- 19 726 677
- US-A- 4 828 166

## Beschreibung

Die Erfindung betrifft ein Verfahren und eine Vorrichtung zum Regeln der Siedetemperatur in einem Dampfgargerät mit einem Garraum, mit einem Wasservorrat als Basis für die Dampferzeugung, einer Heizeinrichtung zum Erwärmen des Wassers, einem im Garraum angeordneten Temperatursensor und einer Regeleinrichtung zum Regeln der Heizeinrichtung mit einer Sollsiedetemperatur als regelbarer Führungsgröße gemäß dem Oberbegriff des Patentanspruchs 1 bzw. dem Oberbegriff des Patentanspruchs 16.

Dampfgargeräte im allgemeinen werden zum drucklosen Garen von Speisen eingesetzt. Über eine Wasserversorgung wird dem Garraum Wasser zugeführt, das durch Erwärmung in Dampf überführt wird. Der Garraum ist dabei weitgehend geschlossen, um einen übermäßigen Verlust an Dampf an die Umgebung zu verhindern. Andererseits sind aber auch Öffnungen vorgesehen, über die durch Entweichen von Dampf ein Druckausgleich mit der Umgebung stattfindet, so dass der Garvorgang weitestgehend bei Umgebungsdruck erfolgt. Im Gegensatz zum Druckgaren wird kein Überdruck in dem Garraum aufgebaut, der zu einer Erhöhung des Siedepunktes des Wassers führen würde.

Bei Erreichen der Siedetemperatur des Wassers findet aufgrund der latenten Wärme des Wassers keine Erhöhung der Temperatur sondern nur noch eine erhöhte Produktion von Dampf durch den Siedeprozess des Wassers statt. Das Zuführen von überschüssiger Energie resultiert in einer stark erhöhten Dampfproduktion und einem entsprechend hohen Verlust an Dampf an die Umgebung, ohne dass dies einen positiven Effekt auf den Garvorgang hätte. Es erhöht sich damit nicht nur der Verbrauch an Wasser, sondern eine hohe Dampfabgabe ist wegen des üblichen Betriebsortes eines solchen Dampfgargerätes in einer mehr oder weniger geschlossenen Küche auch nicht erwünscht. Deshalb sollte die Heizleistung so eingestellt werden, dass die Siedetemperatur gehalten wird, aber es zu keiner Produktion von Dampf im Übermaß kommt.

Problematisch ist dabei, dass die Siedetemperatur von Wasser nicht konstant ist, sondern von den Umgebungsbedingungen abhängt. Für die Siedetemperatur von Wasser ist vor allem der Luftdruck über der Wasserfläche von Bedeutung. Dieser ändert sich aber beispielsweise in Abhängigkeit von der Höhe des Aufstellungsortes des Gargerätes über der Meereshöhe. Als Richtwert kann angenommen werden, dass sich der Siedepunkt von Wasser pro 300m Höhenverschiebung nach oben um 1° C erniedrigt. Auch schwankt der Luftdruck, wenn auch in weit geringerem Maße, in Abhängigkeit von der Wetterlage.

Aus dem Stand der Technik ist bekannt, zur Bestimmung des geänderten Siedepunkts den Luftdruck mittels eines Drucksensors direkt zu bestimmen und in die Berechnung der Siedepunkttemperatur mit einzubeziehen. Dies kann insofern nur eine Näherung sein, da weder die Besonderheiten durch Bauteiltoleranzen des Gargerätes noch die speziellen Bedingungen am Aufstellungsort beispielsweise hinsichtlich Temperatur, Belüftung usw. berücksichtigt werden können.

In der deutschen Offenlegungsschrift DE 197 26 677 A1 wird vorgeschlagen, in einem speziellen, ohne Gargut durchgeführten Kalibriervorgang den Siedepunkt von Wasser an dem Aufstellungsort zu bestimmen, wobei das Wasser so lange erwärmt wird, bis keine Temperaturerhöhung mehr auftritt. Die so bestimmte Siedetemperatur wird als neue Führungsgröße eines Regelkreislaufs eingegeben. Dabei ist von Nachteil, dass der Abgleich in einem speziellen Kalibriervorgang stattfindet und keine Möglichkeit zu einer permanenten Anpassung, d.h. auch während des Garvorgangs, an sich verändernde Bedingungen besteht.

Der Erfindung liegt unter Berücksichtigung dieses Standes der Technik die Aufgabe zugrunde, ein Verfahren und eine Vorrichtung zum Regeln der Wassertemperatur in einem Dampfgargerät vorzuschlagen, mit dem eine Anpassung an unterschiedliche äußere Bedingungen erfolgen kann, ohne dass die vorstehenden Nachteile bestehen.

Die Aufgabe wird bei einem obenstehend beschriebenen Verfahren erfindungsgemäß dadurch gelöst, dass die dem Dampfgargerät während eines Beharrungszustandes zugeführte Heizleistung bestimmt wird und mit einer vorgegebenen Beharrungsleistung verglichen wird. Abhängig von dem Vergleichsergebnis wird eine Sollsiedetemperatur korrigiert, mit der die Siedetemperatur das Dampfgargerätes geregelt wird.

Damit besteht eine Möglichkeit, auf Grundlage der als Gerätekennwert bekannten Beharrungsleistung zu überprüfen, ob die voreingestellte Sollsiedetemperatur an dem Aufstellungsort des Gargerätes der tatsächlichen Siedetemperatur entspricht und diese Sollsiedetemperatur bei Abweichungen auf einen neuen Wert zu regeln.

Der Beharrungszustand wird entweder nach einer vorgegebenen Aufheizzeit angenommen oder die Temperatur des Dampfgargerätes wird überprüft, wobei bei nahezu konstanter Temperatur ein Beharrungszustand erkannt wird. Weiterhin kann die zeitliche Entwicklung der Heizleistung mit einem vorgegebenen Schema verglichen werden, das dem Erreichen eines Beharrungszustandes entspricht. Bei Übereinstimmung wird ein Beharrungszustand erkannt.

In einer vorteilhaften Ausführung wird die Differenz zwischen der tatsächlichen Leistung der Heizeinrichtung bei Erreichen einer konstanten Temperatur und der bekannten Beharrungsleistung in einen Korrekturwert für die Sollsiedetemperatur des Temperaturreglers umgerechnet. Dieser Korrekturwert ermöglicht die Anpassung der Sollsiedetemperatur als Führungsgröße des Regelkreises an die der unter den aktuell gegebenen Bedingungen tatsächliche Siedetemperatur.

Die Isttemperatur als Stellgröße wird dabei mit Vorteil in definierten kleinen Schritten an die aus dem mit dem Korrekturwert beaufschlagten vorbestimmten Sollwert resultierende neue Solltemperatur als Führungsgröße angeglichen, um ein Übersteuern des Regelkreises zu vermeiden und die Auswirkungen durch Fehlmessungen zu minimieren.

In einer weiteren günstigen Ausbildung des Verfahrens wird bei der Berechnung des Korrekturwerts der vorbestimmten Solltemperatur die gemessene Isttemperatur berücksichtigt. Mit Berücksichtigung des Temperatursignals aus dem Garraum steht ein zweiter Indikator zur eindeutigen Bestimmung des Beharrungszustandes zur Verfügung, der im Zusammenwirken mit der Leistungskurve der Heizeinrichtung über der Zeit eine sehr genaue Bestimmung des Erreichens der Beharrung ermöglicht.

Besonders vorteilhaft im Betrieb des Gargerätes ist es, wenn der korrigierte Wert der Solltemperatur sofort berücksichtigt wird, d.h., wenn schon beim nächsten Regelvorgang die Korrektur der vorbestimmten Solltemperatur bei der Führungsgröße des Regelkreises berücksichtigt ist.

In einer alternativen Ausbildung kann der Korrekturwert der vorbestimmten Solltemperatur auch erst beim nächsten Garvorgang berücksichtigt werden. Dies reduziert den Regelungsaufwand während eines Garvorgangs.

Mit Vorteil erfolgt die Regelung der Leistung der Heizeinrichtung über ein Proportionalglied. Proportionalglieder haben die Eigenschaft, dass nur eine Teilkorrektur erfolgt und eine Regelabweichung teilweise erhalten bleibt. Damit führt eine beispielsweise nicht berücksichtigte Störgröße nicht zu einer Überreaktion des Systems.

Es ist weiter empfehlenswert, dem Garraum über die Heizeinrichtung eine geringe Überschussenergie zuzuführen, um Differenzen durch verbleibende Fehler ausgleichen zu können. Dies auch deshalb, weil ein geringer Energieüberschuss nur zu einer vergleichsweise geringen Mehrproduktion von Dampf führt.

Günstig ist dabei auch, die Wasserzufuhr in den Garraum des Gargerätes über das Stellglied des Regelkreises zu steuern. Damit ist auch die Wassermenge und damit auch die Feuchtigkeit im Garraum steuerbar.

Mit Vorteil wird die Leistung der Heizeinrichtung über eine Messeinrichtung bestimmt, wobei der Bestimmung der Taktung der Spannungsquelle zur Ermittlung des Leistungsbedarfs der Vorzug zu geben ist.

Auch kann die Abweichung der Umgebungstemperatur gegenüber einem Standardwert als Korrektur für den Beharrungsenergieverbrauch verwendet werden, da die Umgebungstemperatur einen nicht mit einem generellen Gerätekennwert erfassbaren Einfluss auf den Beharrungszustand hat.

Dieses Verfahren kann bei einer Vorrichtung bekannter Ausbildung angewandt werden, wenn erfindungsgemäß an der Heizeinrichtung eine Messeinrichtung zur Bestimmung der Leistung der Heizeinrichtung angeordnet ist. Mit dem so erhaltenen Wert der Heizleistung, kann die Regelung gemäß dem vorbeschriebenen Verfahren erfolgen.

Weiter mit Vorteil weist die Regeleinrichtung eine mit der Messeinrichtung an der Heizeinrichtung und der Regeleinrichtung für die Heizleistung zusammenwirkende Berechnungseinheit auf. Mit dieser Berechnungseinheit erfolgt die Kalkulation einer neuen Führungsgröße für den Regelkreis.

In vorteilhafter Fortbildung sind dabei die Regeleinrichtung und die Berechnungseinheit in dem geschlossenen Microcontroller angeordnet. Sie sind damit gegen äußere Störeinflüsse geschützt und können als bauliche Einheit ein- und ausgebaut werden.

In einer weiteren günstigen Ausbildung ist eine mit dem Wasservorrat verbundene Wasserversorgung und ein zwischen der Wasserversorgung und dem Wasservorrat angeordnetes Stellventil vorgesehen. Mit diesem Stellventil, kann im Zusammenwirken mit dem Stellglied der Regeleinrichtung die Wasserzufuhr in das Gargerät gesteuert werden.

Vorteilhaft ist auch das Vorsehen einer Regeleinrichtung zur Sicherstellung der Wasserversorgung im Garraum.

Weitere Vorteile und Details der Erfindung können den angehängten Patentansprüchen sowie der Beschreibung eines in den Zeichnungen dargestellten Ausführungsbeispiels entnommen werden.

Dabei zeigt:
- Fig. 1: ein Dampfgargerät in Vorderansicht im Querschnitt
- Fig. 2: eine Darstellung des Regelkreises im Schaltdiagramm in teilweise schematisierter Darstellung

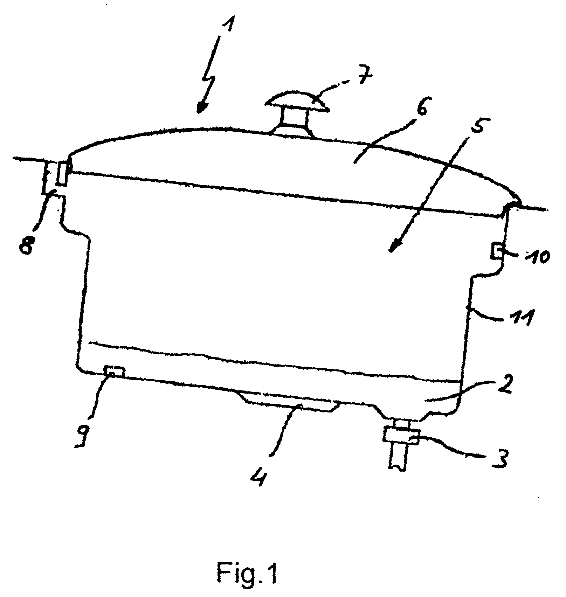

Fig. 1 zeigt ein Dampfgargerät 1 zum Garen bzw. Kochen vorzugsweise von Lebensmitteln mittels heißem Dampf. In dem Gargerät 1 befindet sich ein Wasservorrat 2, der das Wasser zur Erzeugung des Dampfes zur Verfügung stellt. Der Wasservorrat 2 kann über einen Zugang 3 mit zusätzlichem Wasser versorgt werden. Auch kann über den Zugang 3 Wasser aus dem Wasservorrat 2 des Dampfgargerätes 1 abgelassen werden.

Der Wasservorrat 2 kann über eine Heizeinrichtung 4 soweit erwärmt werden, bis das Wasser seine Siedetemperatur erreicht hat und in dampfförmigen Zustand übergeht. Das Gargut befindet sich in einem Garraum 5 des Dampfgargerätes 1 und wird durch den am Gargut kondensierenden Dampf erhitzt. Um den Verlust an Dampf und damit auch an Energie und Wasser aus dem Dampfgargerät 1 möglichst gering zu halten, ist dieses durch einen Deckel 6 mit einem Griff 7 verschlossen. Dabei kann es sich bei dem Dampfgargerät 1 selbstverständlich auch um einen Backofen mit Tür handeln. Da das Dampfgargerät 1 nicht bei Überdruck betrieben werden soll, ist am oberen Ende des Dampfgargerätes 1, in direkter Nachbarschaft zu dem Deckel 6, ein Dampfauslass 8 angeordnet, über den der Garraum 5 in Verbindung mit der Umgebungsatmosphäre steht und über den ein permanenter Druckausgleich stattfinden kann. In dem Wasservorrat 2 ist ein Temperatursensor 9 zur Bestimmung der Wassertemperatur vorgesehen. Die Temperatur des Dampfes im Garraum 5 wird mittels eines weiteren Temperatursensors 10 ermittelt, der oberhalb des Wasservorrats 2 an einer Seitenwand 11 des Dampfgargerätes 1 angeordnet ist. Alternativ wäre auch eine nicht gezeigte Anordnung des Temperatursensors zur Bestimmung der Dampftemperatur im Garraum 5 im Bereich des Dampfauslasses 8 möglich.

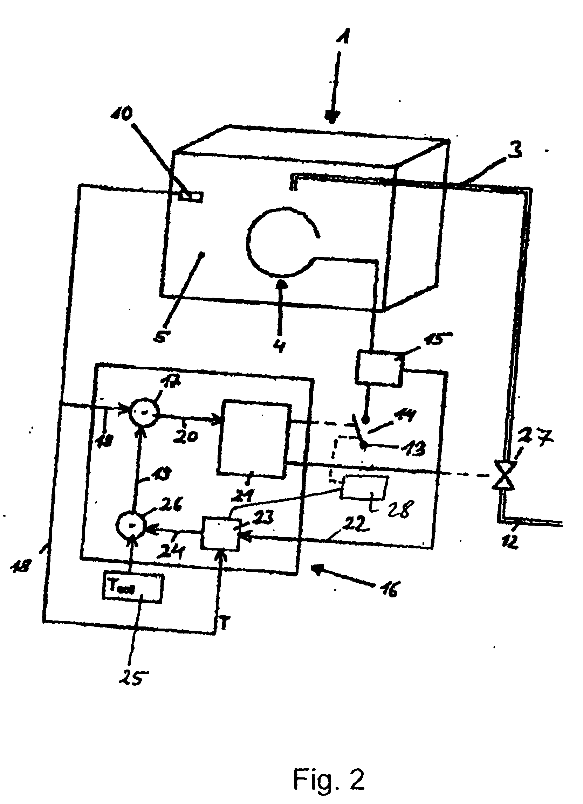

In Fig. 2 ist in einem Schaltdiagramm das Dampfgargerät 1, mit dem Wasserzulauf 3, der Heizeinrichtung 4 und dem weiteren Temperatursensor 10 zur Bestimmung der Dampftemperatur im Garraum 5 schematisiert dargestellt. Der in Fig. 1 gezeigte Wasservorrat 2 wird über die Wasserversorgung 12 gespeist. Die Heizeinrichtung 4 ist über den Schalter 14 mit der Spannungsquelle 13 verbunden. Zwischen der Spannungsquelle 13 und der Heizeinrichtung 4 ist des weiteren eine Leistungsmesseinrichtung 15 angeordnet, mit der die der Heizeinrichtung 4 zufließende Heizleistung aufgenommen werden kann. Die Leistungsmesseinrichtung 15 erfasst dabei die Taktung der Spannungsquelle 13 und aus dieser Taktung ist der Leistungsbedarf der Heizeinrichtung berechenbar.

Die beeinflussbaren Vorgänge in dem Dampfgargerät 1 werden über einer Microcontroller 16 geregelt. Der Microcontroller 16 weist dabei zwei zusammenwirkende Regelkreise auf. Mit einem ersten Regelkreis wird über ein Regelglied 17 die Temperatur im Garraum 5 des Dampfgargerätes 1 als Regelgröße 18 an eine Sollsiedetemperatur als Führungsgröße 19 angeglichen. Die Isttemperatur im Garraum wird über den weiteren Temperatursensor 10 bestimmt. Von dem Regelglied 17 geht dabei ein Signal 20 an ein Stellglied 21. Mit dem Stellglied 21 wird sowohl ein Schalter 14 zum Anschluss der Heizeinrichtung 4 an die Spannungsquelle 13 als auch ein Magnetventil 27 zum Öffnen und Schließen der Wasserversorgung 12 betätigt, das zwischen der Wasserversorgung 12 und dem Wasserzulauf 3 angeordnet ist. Dabei könnte auch ein nicht gezeigter Sensor zur Bestimmung der Feuchtigkeit und/oder ein zweiter nicht gezeigter Sensor zur Bestimmung der Flüssigkeitsmenge im Wasservorrat 2 des Gargerätes eingesetzt werden. Mit dem Verbinden der Heizeinrichtung 4 mit der Spannungsquelle 13 wird das Wasser im Wasservorrat auf die Sollsiedetemperatur erwärmt. Vorzugsweise ist eine Zeitmesseinrichtung 28 angeordnet, die mit dem Schalter 14 und mit der Berechnungseinheit 23 verbunden ist. Die Zeitmesseinrichtung 28 erfasst die Zeit ab dem Schließen des Schalters, die eine Aufheizzeit darstellt. Nach Erreichen einer vorgegebenen Aufheizzeit gibt die Zeitmesseinrichtung 28 ein Signal an die Berechnungseinheit 23. Die Zeitmesseinrichtung 28 kann auch direkt mit der Heizeinrichtung 4 oder mit der Leistungsmesseinrichtung 15 verbunden sein, um einen Start eines Aufheizvorganges feststellen zu können. Im Idealfall entspricht die Sollsiedetemperatur der tatsächlichen Siedetemperatur, bei der das Wasser im Wasservorrat zum Kochen gebracht wird und es bei konstanter Temperatur zur Entwicklung von Dampf kommt. Entspricht das Temperatursignal als Regelgröße 18 dem Wert der Führungsgröße 19, ist der erste Regelvorgang beendet.

Der Siedepunkt von Wasser ist keine konstante Größe, sondern variiert in Abhängigkeit von den äußeren Bedingungen, insbesondere in Abhängigkeit von dem Druck über der Wasserfläche. Da das Gargerät zur Umgebung offen ist, liegt über der Wasserfläche Umgebungsdruck an. Ist das Dampfgargerät 1 beispielsweise in großer Höhe aufgestellt, ist der Umgebungsdruck und damit auch die Siedetemperatur gegenüber Standardbedingungen entsprechend erniedrigt. Aufgrund des niedrigeren Siedepunktes kann die als Sollwert 19 vorgegebene Sollsiedetemperatur überhaupt nicht mehr erreicht werden, da im Moment des Siedens die Wasser- und damit auch die Dampftemperatur nicht mehr weiter ansteigen, da jede zusätzlich zugeführte Energie nur zu einer vermehrten Produktion von Dampf führt. Die Heizeinrichtung 4 arbeitet mit einer vergleichsweise hohen Leistung, ohne dass eine Erhöhung der Isttemperatur und damit eine Annäherung an die Solltemperatur stattfindet. Die bei konstant bleibender Temperatur verbrauchte Leistung der Heizeinrichtung 4 wird in Relation gesetzt zu der Beharrungsleistung, die sich bei standardisierten Bedingungen einstellt. Je größer die Differenz zwischen der tatsächlich Leistung und der Beharrungsleistung ist, desto größer ist auch die Differenz zwischen der als Führungsgröße 19 eingegebenen Sollsiedetemperatur und der sich tatsächlich einstellenden Siedetemperatur des Wasser unter den gegebenen Bedingungen. Aus der Differenz zwischen dem tatsächlichen Leistungsbedarf und der erwarteten Beharrungsleistung wird ein Korrekturwert für die Sollsiedetemperatur als neue Führungsgröße 19 berechnet. Die Abhängigkeit zwischen einer Erhöhung oder einer Erniedrigung der Sollsiedetemperatur und der Differenz zwischen der tatsächlichen Leistung und der Beharrungsleistung ist in einer Tabelle abgelegt und wurde experimentell ermittelt.

Auch kann die sich im Beharrungszustand des Energieverbrauchs einstellende und mittels des weiteren Temperatursensors 10 messbare Temperatur im Garraum zur Korrektur der Sollsiedetemperatur herangezogen werden. Die Änderungen der Sollsiedetemperatur 19 erfolgen dabei in kleinen Schritten, so dass einzelne Fehlmessungen nicht zu einem Kollaps der gesamten Reglerfunktion führen können. Die Beharrungsleistung kann dabei für jedes Dampfgargerät einzeln bestimmt oder bei serienmäßig hergestellten Geräten als Gerätekennwert im Speicher des Microcontrollers 16 hinterlegt werden. Für diese Beharrungsleistung kann auch ein Korrekturfaktor in Abhängigkeit von der jeweils beim Betrieb des Gerätes herrschenden Umgebungstemperatur am Aufstellungsort des Gerätes vorgesehen werden. Dazu ist es notwendig, diese Temperatur durch einen Sensor zu Beginn des Vorgangs bei kaltem Gerät oder durch direkte Außenmessung zu bestimmen.

Das vorstehend geschilderte Problem tritt auch auf, wenn die tatsächliche Siedetemperatur über der Sollsiedetemperatur liegt und der Beharrungszustand beim Sieden des Wassers überhaupt nicht erreicht wird. In diesem Fall liegt der Leistungsbedarf entsprechend der Abweichung der Siedetemperatur von der Sollsiedetemperatur unter dem erwarteten Leistungsbedarf im Beharrungszustand. Auch diese Differenz im Leistungsbedarf wird zur Korrektur des Wertes der Sollsiedetemperatur genutzt.

Die Solltemperatur als Führungsgröße 19 wird damit über einen zweiten Steuerkreis 23, 25, 26 während des Garvorgangs in dem Gargerät 1 verändert. Ein zweites Signal 22 der Heizleistung, das an der Leistungsmesseinrichtung 15 abgenommen wird, wird an die Einheit 23 zur Berechnung eines Korrekturwertes 24 für die vorbestimmte Solltemperatur 25 und der daraus resultierenden Solltemperatur 19 als Führungsgröße des Regelglieds 17 weitergeleitet. Bei dem Versuch des Reglers bei Erreichung des Beharrungszustandes, also des Zustandes in dem der Garraum1 samt Inhalt mit einem definierten Energieund Wasserbedarf seine Temperatur und Feuchtigkeit halten kann, die Temperatur weiter zu erhöhen, stellt sich eine Mehrleistung der Heizeinrichtung ein, die über längere Zeit weitgehend konstant bleibt. Aus dieser Mehrleistung wird mittels einer Berechnungseinheit 23 der Korrekturwert 24 für die vorbestimmte Solltemperatur 25 berechnet, so dass insgesamt an dem Regler 26 eine neue Führungsgröße 19 für das Regelglied 17 festgelegt wird. Das Gleiche gilt bei Erreichen des Beharrungszustandes vor Erreichen der Sollsiedetemperatur. Der Beharrungszustand wird in einer einfachen Ausführungsform dadurch festgelegt, dass nach dem Beginn eines Aufheizvorganges für das Dampfgargerät nach Ablauf einer experimentell bestimmten Aufheizzeit ein Beharrungszustand angenommen wird. Die Aufheizzeit ist vorzugsweise so groß festgelegt, dass der Beharrungszustand sicher erreicht wird. Um den Beharrungszustand aufgrund zweier unabhängiger Indikatoren mit noch höherer Sicherheit bestimmen zu können, wird auch das Signal des weiteren Temperatursensors 10 aus dem Garraum 5 der Berechnungseinheit 23 zugeführt und über der Zeit aufgenommen. Ein Beharrungszustand wird erkannt, wenn sich die Temperatur nicht mehr oder kaum mehr erhöht. Die zeitliche Änderung der Temperatur, ab der ein Beharrungszustand erkannt wird, wurde experimentell festgelegt. Auch kann die zeitliche Änderung der Temperatur alleine verwendet werden, um einen Beharrungszustand zu erkennen.

Eine dritte Variante zur Bestimmung des Beharrungszustandes besteht darin, die zeitliche Entwicklung der Heizleistung mit einer vorgegebenen zeitlichen Entwicklung der Heizleistung zu vergleichen, die sich bei Erreichen eines Beharrungszustandes ergibt, und die in einem Speicher abgelegt ist. Stimmen die zeitlichen Entwicklungen überein, so wird ein Beharrungszustand erkannt.

Das Regelglied 17 ist so eingestellt, dass die Anpassung des gemessenen Istwertes der Temperatur an die mittels des Korrekturwertes 24 aus der vorbestimmten Sollsiedetemperatur 25 berechneten neuen Solltemperatur 19 als Führungsgröße des Reglers in kleinen, begrenzten Schritten durchgeführt und damit Abweichungen des Istwertes nur langsam an den neuen Sollwert herangeführt werden. Störungen wie häufiges Öffnen des Gargerätes 1 bleiben dann ohne größere Konsequenzen. Wird beispielsweise wegen häufigem Öffnen des Garraums keine Beharrung im Energieverbrauch über einen bestimmten Zeitraum erreicht, erfolgt keine Korrektur der Sollsiedetemperatur.

Insgesamt ist festzustellen, dass die vorbestimmte Sollsiedetemperatur 25 im Grundsatz beliebig gewählt werden kann, da der korrekte Siedepunkt - wie vorstehend geschildert - automatisch eingeregelt wird. Dennoch ist es natürlich von Vorteil, die Werte für die vorbestimmte Sollsiedetemperatur möglichst realistisch vorzugeben, um den Regelvorgang möglichst kurz zu halten und auch die Gefahr von Komplikationen zu vermeiden.

## Patentansprüche

1. Verfahren zum Regeln der Siedetemperatur in einem Dampfgargerät mit einer Heizeinrichtung zum Erwärmen des Dampfgargerätes, mit einem Temperatursensor, mit einer Regeleinrichtung zum Regeln der Heizeinrichtung mit einer Sollsiedetemperatur als Führungsgröße, **dadurch gekennzeichnet, dass**
nach Erreichen eines Beharrungszustandes die Leistung der Heizeinrichtung (4) erfasst wird,
dass die erfasste Leistung mit einer vorgegebenen Beharrungsleistung verglichen wird,
und dass abhängig von dem Vergleichsergebnis die Sollsiedetemperatur verändert wird.

2. Verfahren nach Anspruch 1, **dadurch gekennzeichnet, dass** der Beharrungszustand nach Ablauf einer Aufheizzeit erreicht wird, die seit dem Start eines Aufheizvorganges vergangen ist.

3. Verfahren nach Anspruch 1 oder 2, **dadurch gekennzeichnet, dass** der Beharrungszustand erreicht wird, wenn sich die Temperatur des Dampfgargerätes (1) nicht mehr oder nur wenig ändert.

4. Verfahren nach einem der Ansprüche 1 bis 3, **dadurch gekennzeichnet, dass** der Beharrungszustand erreicht wird, wenn die zeitliche Entwicklung der Heizeinrichtung (4) eine vorgegebene zeitliche Entwicklung aufweist.

5. Verfahren nach einem der Ansprüche 1 bis 4, **dadurch gekennzeichnet, dass** die Differenz zwischen der Leistung (22) der Heizeinrichtung (4) und der Beharrungsleistung in einen Korrekturwert (24) für die Sollsiedetemperatur (25) eines Temperaturreglers (17) umgerechnet wird.

6. Verfahren nach einem der Ansprüche 1 bis 5, **dadurch gekennzeichnet, dass** eine Isttemperatur (18) als Stellgröße in definierten kleinen Schritten an die aus dem mit dem Korrekturwert (24) beaufschlagten vorbestimmten Sollwert (25) resultierende neue Solltemperatur (19) als Führungsgröße angeglichen wird.

7. Verfahren nach einem der Ansprüche 1 bis 6, **dadurch gekennzeichnet, dass** bei der Berechnung des Korrekturwerts (24) für die vorbestimmte Solltemperatur (25) zusätzlich die Isttemperatur (18) berücksichtigt wird.

8. Verfahren nach einem der Ansprüche 1 bis 7, **dadurch gekennzeichnet, dass** der Korrekturwert (24) der vorbestimmten Solltemperatur (25) beim aktuellen Garvorgang berücksichtigt wird.

9. Verfahren nach einem der Ansprüche 1 bis 7, **dadurch gekennzeichnet, dass** der Korrekturwert (24) der Solltemperatur (25) beim nächsten Garvorgang berücksichtigt wird.

10. Verfahren nach einem der Ansprüche 1 bis 9, **dadurch gekennzeichnet, dass** die Leistung der Heizeinrichtung (4) über ein Proportionalglied geregelt wird.

11. Verfahren nach einem der Ansprüche 1 bis 10, **dadurch gekennzeichnet, dass** dem Garraum (5) über die Heizeinrichtung (4) im Beharrungszustand eine geringe Überschussenergie zugeführt wird.

12. Verfahren nach einem der Ansprüche 1 bis 11, **dadurch gekennzeichnet, dass** die Wasserzufuhr (12) in das Gargerät (1) über ein Stellglied (21) des Regelkreises gesteuert wird.

13. Verfahren nach einem der Ansprüche 1 bis 12, **dadurch gekennzeichnet, dass** die Leistung der Heizeinrichtung (4) über eine Leistungsmesseinrichtung (15) bestimmt wird.

14. Verfahren nach Anspruch 13, **dadurch gekennzeichnet, dass** die Leistungsmesseinrichtung die Taktung einer Spannungsquelle (13) als Größe für die zugeführte Leistung aufnimmt.

15. Verfahren nach einem der Ansprüche 1 bis 14, **dadurch gekennzeichnet, dass** die Abweichung der Umgebungstemperatur gegenüber einem Standardwert als Korrekturfaktor für die Beharrungsleistung verwendet wird.

16. Vorrichtung zum drucklosen Dampfgaren mit einem Dampfgargerät mit einem Wasservorrat, mit einer Heizeinrichtung zum Erwärmen des Wasservorrats, mit einem Temperatursensor zum Bestimmen der Temperatur im Wasservorrat und/oder im Dampfraum und mit einer Regeleinrichtung zum Regeln der Heizeinrichtung, **dadurch gekennzeichnet,**
**dass** eine Messeinrichtung (15) zur Bestimmung der Leistung der Heizeinrichtung (4) angeordnet ist,
**dass** eine Korrektureinheit (23, 25, 26) vorgesehen ist, die mit der Messeinrichtung (15) verbunden ist,
**dass** die Korrektureinheit (23, 25, 26) mit der Regeleinrichtung (17) verbunden ist,
**dass** die Korrektureinheit (23, 25, 26) aus einer gemessenen Leistung, die die Heizeinrichtung (4) während eines Beharrungszustandes abgibt, und aus einer vorgegebenen Beharrungsleistung eine korrigierte Sollsiedetempertaur ermittelt und der Regeleinrichtung (17) zuführt.

17. Vorrichtung nach Anspruch 16, **dadurch gekennzeichnet, dass** die Regeleinrichtung (26,17,21) und die Berechnungseinheit (23) in einem Microcontroller (16) angeordnet sind.

18. Vorrichtung nach einem der Ansprüche 13 oder 14, **dadurch gekennzeichnet, dass** eine mit dem Wasservorrat (2) verbundene Wasserversorgung (12) und ein zwischen der Wasserversorgung (12) und dem Wasservorrat (2) angeordnetes Stellventil (27) vorgesehen ist.

19. Vorrichtung nach einem der Ansprüche 16 bis 18, **dadurch gekennzeichnet, dass** eine Regeleinrichtung für die Wasserversorgung im Garraum (5) vorgesehen ist.

20. Vorrichtung nach einem der Ansprüche 16 bis 19, **dadurch gekennzeichnet, dass** eine Zeitmesseinrichtung (28) vorgesehen ist, dass die Zeitmesseinrichtung (28) mit der Heizeinrichtung (4) und mit der Korrektureinheit (23, 25, 26) verbunden ist,
dass die Zeitmesseinrichtung (28) den Start eines Heizvorganges eines Dampfgargerätes (1) erfasst und nach einer vorgegebenen Aufwärmzeit ein Signal für das Erreichen des Beharrungszustandes an die Korrektureinheit (23, 25, 26) abgibt.

21. Vorrichtung nach einem der Ansprüche 16 bis 20, **dadurch gekennzeichnet, dass** die Korrektureinheit (23, 25, 26) mit dem Temperatursensor (9, 10) verbunden ist,
und dass die Korrektureinheit (23, 25, 26) das Erreichen eines Beharrungszustandes erkennt, wenn die Temperatur nahezu unverändert bleibt.

22. Vorrichtung nach einem der Ansprüche 16 bis 21, **dadurch gekennzeichnet, dass** die Korrektureinheit (23, 25, 26) die zeitliche Entwicklung der Heizleistung bei einem Aufheizvorgang erfasst und mit einem vorgegebenen Schema vergleicht, das einem Beharrungszustand entspricht, und dass die Korrektureinheit (23, 25, 26) aus dem Vergleich einen Beharrungszustand erkennt.

## Claims

1. Method of regulating the boiling temperature in a steam cooking appliance, comprising a heating device for heating the steam cooking appliance, a temperature sensor and a regulating device for regulating the heating device by a target boiling temperature as guide magnitude, **characterised in that** after attainment of a steady state the power of the heating device (4) is detected, the detected power is compared with a predetermined steady power and depending on the comparison result the target boiling temperature is changed.

2. Method according to claim 1, **characterised in that** the steady state is reached after elapsing of a heating-up time which has passed since the start of a heating-up process.

3. Method according to claim 1 or 2, **characterised in that** the steady state is reached when the temperature of the steam cooking appliance (1) no longer changes or changes only slightly.

4. Method according to one of claims 1 to 3, **characterised in that** the steady state is reached when the development over time of the heating device (4) has a predetermined development over time.

5. Method according to one of claims 1 to 4, **characterised in that** the difference between the power (22) of the heating device (4) and the steady power is recalculated into a correction value (24) for the target boiling temperature (25) of a temperature regulator (17).

6. Method according to one of claims 1 to 5, **characterised in that** an actual temperature (18) as setting magnitude is assimilated to the new target temperature (19), which results from the predetermined target value (25) acted on by the correction value (24), as guide magnitude.

7. Method according to one of claims 1 to 6, **characterised in that** in the case of calculation of the correction value (24) for the predetermined target temperature (25) the actual temperature (18) is additionally taken into consideration.

8. Method according to one of claims 1 to 7, **characterised in that** the correction value (24) of the predetermined target temperature (25) is taken into consideration in the current cooking process.

9. Method according to one of claims 1 to 7, **characterised in that** the correction value (24) of the predetermined target temperature (25) is taken into consideration in the next cooking process.

10. Method according to one of claims 1 to 9, **characterised in that** the power of the heating device (4) is regulated by way of a proportional element.

11. Method according to one of claims 1 to 10, **characterised in that** a small excess energy is supplied to the cooking space (5) by way of the heating device (4) in the steady state.

12. Method according to one of claims 1 to 11, **characterised in that** the water feed (12) to the cooking appliance (1) is controlled by way of a setting element (21) of the regulating circuit.

13. Method according to one of claims 1 to 12, **characterised in that** the power of the heating device (4) is determined by way of an power measuring device (15).

14. Method according to claim 13, **characterised in that** the power measuring device records the cycle rate of a voltage source (13) as magnitude for the supplied power.

15. Method according to one of claims 1 to 14, **characterised in that** the deviation of the ambient temperature relative to a standard value is used as correction factor for the steady power.

16. Device for pressureless steam cooking by a steam cooking appliance with a water reserve, a heating device for heating the water reserve, a temperature sensor for determining the temperature in the water reserve and/or in the steam chamber and a regulating device for regulating the heating device, **characterised in that** a measuring device (15) is arranged for determining the power of the heating device (4), a correction unit (23, 25, 26), which is connected with the measuring device (15), is provided, the correction unit (23, 25, 26) is connected with the regulating device (17) and the correction unit (23, 25, 26) determines a corrected target boiling temperature from a measured power which the heating device (4) delivers during a steady state and from a predetermined steady power and supplies the corrected target boiling temperature to the regulating device (17).

17. Device according to claim 16, **characterised in that** the regulating device (26, 17, 21) and the calculation unit (23) are arranged in a microcontroller (16).

18. Device according to one of claims 13 and 14, **characterised in that** a water supply (12) connected with the water reserve (2) and a setting valve (27) arranged between the water supply (12) and the water reserve (2) are provided.

19. Device according to one of claims 16 to 18, **characterised in that** a regulating valve for the water supply to the cooking space (5) is provided.

20. Device according to one of claims 16 to 19, **characterised in that** a time measuring device (28) is provided, the time measuring device (28) is connected with the heating device (4) and with the correction unit (23, 25, 26) and the time measuring device (28) detects the start of a heating process of a steam cooking appliance (1) and after a predetermined heating-up time delivers a signal for attainment of the steady state to the correction unit (23, 25, 26).

21. Device according to one of claims 16 to 20, **characterised in that** the correction unit (23, 25, 26) is connected with the temperature sensor (9, 10) and the correction unit (23, 25, 26) recognises attainment of a steady state when the temperature remains almost unchanged.

22. Device according to one of claims 16 to 21, **characterised in that** the correction unit (23, 25, 26) detects the development of the heat power over time in a heating-up process and compares it with a predetermined pattern corresponding with a steady state and the correction unit (23, 25, 26) recognises a steady state from the comparison.

## Revendications

1. Procédé de réglage de la température d'ébullition dans un appareil de cuisson à vapeur comprenant un dispositif de chauffage pour chauffer l'appareil de cuisson à vapeur, un détecteur de température, un dispositif de réglage pour régler le dispositif de chauffage à une température d'ébullition de consigne comme grandeur de référence, **caractérisé en ce qu'**après avoir atteint un état d'équilibre, la puissance du dispositif de chauffage (4) est détectée,
**en ce que** la puissance détectée est comparée à une puissance d'équilibre prédéfinie,
et **en ce que**, en fonction du résultat de comparaison, la température d'ébullition de consigne est modifiée.

2. Procédé selon la revendication 1, **caractérisé en ce que** l'état d'équilibre est atteint après écoulement d'un temps d'échauffement qui s'est écoulé depuis le début d'un processus d'échauffement.

3. Procédé selon la revendication 1 ou 2, **caractérisé en ce que** l'état d'équilibre est atteint lorsque la température de l'appareil de cuisson à vapeur (1) ne se modifie plus ou seulement peu.

4. Procédé selon les revendications 1 à 3, **caractérisé en ce que** l'état d'équilibre est atteint lorsque l'évolution temporelle du dispositif de chauffage (4) présente une évolution temporelle prédéfinie.

5. Procédé selon l'une des revendications 1 à 4, **caractérisé en ce que** la différence entre la puissance (22) du dispositif de chauffage (4) et la puissance d'équilibre est convertie en une valeur de correction (24) pour la température d'ébullition de consigne (25) d'un dispositif de réglage de température (17).

6. Procédé selon l'une des revendications 1 à 5, **caractérisé en ce qu'**une température effective (18) comme grandeur de réglage est adaptée par petites étapes définies à la nouvelle température de consigne (19) comme valeur de référence, résultant de la valeur de consigne (25) prédéterminée à laquelle est appliquée la valeur de correction (24).

7. Procédé selon l'une des revendications 1 à 6, **caractérisé en ce que** lors du calcul de la valeur de correction (24) pour la température de consigne prédéterminée (25), la température effective (18) est prise en compte en complément.

8. Procédé selon l'une des revendications 1 à 7, **caractérisé en ce que** la valeur de correction (24) de la température de consigne prédéterminée (25) est prise en compte dans le processus de cuisson actuel.

9. Procédé selon l'une des revendications 1 à 7, **caractérisé en ce que** la valeur de correction (24) de la température de consigne (25) est prise en compte dans le processus de cuisson suivant.

10. Procédé selon l'une des revendications 1 à 9, **caractérisé en ce que** la puissance du dispositif de chauffage (4) est réglée au moyen d'un élément de transfert à action proportionnelle.

11. Procédé selon l'une des revendications 1 à 10, **caractérisé en ce qu'**un faible excédent d'énergie est amené à l'espace de cuisson (5) par l'intermédiaire du dispositif de chauffage (4) dans l'état d'équilibre.

12. Procédé selon l'une des revendications 1 à 11, **caractérisé en ce que** l'alimentation en eau (12) dans l'appareil de cuisson (1) est commandée au moyen d'un actionneur (21) du circuit de réglage.

13. Procédé selon l'une des revendications 1 à 12, **caractérisé en ce que** la puissance du dispositif de chauffage (4) est déterminée au moyen d'un dispositif de mesure de la puissance (15).

14. Procédé selon la revendication 13, **caractérisé en ce que** le dispositif de mesure de la puissance accepte la synchronisation d'une source de tension (13) comme grandeur pour la puissance amenée.

15. Procédé selon l'une des revendications 1 à 14, **caractérisé en ce que** l'écart entre la température ambiante et une valeur standard est utilisé comme facteur de correction pour la puissance d'équilibre.

16. Dispositif pour cuisson à la vapeur sans pression avec un appareil de cuisson à vapeur comprenant une réserve d'eau, un dispositif de chauffage pour chauffer la réserve d'eau, un détecteur de température pour déterminer la température dans la réserve d'eau et/ou dans un espace de vapeur et un dispositif de réglage pour régler le dispositif de chauffage, **caractérisé en ce qu'**un dispositif de mesure (15) destiné à déterminer la puissance du dispositif de chauffage (4) est disposé,
**en ce qu'**une unité de correction (23, 25, 26) est prévue qui est reliée au dispositif de mesure (15),
**en ce que** l'unité de correction (23, 25, 26) est reliée au dispositif de réglage (17),
**en ce que** l'unité de correction (23, 25, 26) établit une température d'ébullition de consigne corrigée à partir d'une puissance mesurée que fournit le dispositif de chauffage (4) pendant un état d'équilibre, et à partir d'une puissance d'équilibre prédéfinie et l'amène au dispositif de réglage (17).

17. Dispositif selon la revendication 16, **caractérisé en ce que** le dispositif de réglage (26, 17, 21) et l'unité de calcul (23) sont disposés dans un microcontrôleur (16).

18. Dispositif selon l'une des revendications 13 ou 14, **caractérisé en ce qu'**une alimentation en eau (12) reliée à la réserve d'eau (2) et une soupape de réglage (27) disposée entre l'alimentation en eau (12) et la réserve d'eau (2) est prévue.

19. Dispositif selon l'une des revendications 16 à 18, **caractérisé en ce qu'**un dispositif de réglage est prévu pour l'alimentation en eau dans l'espace de cuisson (5).

20. Dispositif selon l'une des revendications 16 à 19, **caractérisé en ce qu'**un dispositif de mesure du temps (28) est prévu, **en ce que** le dispositif de mesure du temps (28) est relié au dispositif de chauffage (4) et à l'unité de correction (23, 25, 26),
**en ce que** le dispositif de mesure du temps (28) détecte le début d'un processus de chauffage d'un appareil de cuisson à vapeur (1) et après un temps d'échauffement prédéfini délivre un signal correspondant à l'état d'équilibre qtteint à l'unité de correction (23, 25, 26).

21. Dispositif selon l'une des revendications 16 à 20, **caractérisé en ce que** l'unité de correction (23, 25, 26) est reliée au détecteur de température (9, 10)
et **en ce que** l'unité de correction (23, 25, 26) reconnaît lorsqu'un état d'équilibre est atteint si la température demeure presque inchangée.

22. Dispositif selon l'une des revendications 16 à 21, **caractérisé en ce que** l'unité de correction (23, 25, 26) détecte l'évolution temporelle de la puissance de chauffage dans un processus d'échauffement et la compare à un schéma prédéfini, qui correspond à un état d'équilibre, et **en ce que** l'unité de correction (23, 25, 26) reconnaît un état d'équilibre d'après la comparaison.
